(19) **Europäisches Patentamt / European Patent Office / Office européen des brevets**

(11) **EP 2 303 695 B1**

(12) **FASCICULE DE BREVET EUROPEEN**

(45) Date de publication et mention
de la délivrance du brevet:
**29.05.2013 Bulletin 2013/22**

(51) Int Cl.:
**B64D 31/12** *(2006.01)*

(21) Numéro de dépôt: **09740352.1**

(86) Numéro de dépôt international:
**PCT/FR2009/051464**

(22) Date de dépôt: **21.07.2009**

(87) Numéro de publication internationale:
**WO 2010/010293 (28.01.2010 Gazette 2010/04)**

(54) **AERONEF COMPRENANT UN MOTEUR COMMANDE PAR SYNCHROPHASAGE**

LUFTFAHRZEUG MIT DURCH SYNCHROPHASING GESTEUERTEM TRIEBWERK

AIRCRAFT INCLUDING ENGINE CONTROLLED BY SYNCHROPHASING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.07.2008 FR 0855063**

(43) Date de publication de la demande:
**06.04.2011 Bulletin 2011/14**

(73) Titulaire: **Airbus Operations**
**31000 Toulouse (FR)**

(72) Inventeurs:
• **SAUCRAY, Jean Michel**
**F-45560 SAINT DENIS EN VAL (FR)**
• **CHAREYRE, Philippe**
**F-31880 La Salvetat Saint Gilles (FR)**

(74) Mandataire: **Potdevin, Emmanuel Eric et al**
**Cabinet Lhermet la Bigne & Remy**
**11 boulevard de Sébastopol**
**75001 Paris (FR)**

(56) Documents cités:
**EP-A- 1 296 082      WO-A-2008/079431**
**GB-A- 2 275 984**

**Description**

L'invention concerne les aéronefs comprenant au moins un moteur à rotors contrarotatifs.

Il peut s'agit d'un moteur à hélices contrarotatives tel qu'un turbopropulseur de type propfan, ou encore d'un moteur d'aéronef à voilure tournante tel qu'un hélicoptère.

Dans l'industrie du transport aérien, on cherche depuis longtemps à atténuer les vibrations et le bruit produits par les moteurs. Les techniques à ce sujet sont de différents types.

On connaît ainsi des techniques d'équilibrage passif ou actif dans lesquelles on mesure le balourd inertiel ou aérodynamique et on le corrige, comme c'est le cas par exemple dans le document WO-2006/017201.

On connaît d'autre part des techniques dites de synchrophasage entre plusieurs moteurs qui permettent de limiter le bruit généré à la fréquence de passage de pales comme c'est le cas par exemple dans les documents US-4 689 821, US-2005/0065712, WO-2005/042959 et US-00/5221185. Le principal problème avec ces techniques d'équilibrage et de synchrophasage par la chaîne de commande des moteurs est que le délai de la chaîne de commande doit être très inférieur à la période séparant le passage de deux pales devant le capteur utilisé. Or ce n'est jamais le cas, de sorte qu'aucune application industrielle n'est envisageable.

On connaît par ailleurs des techniques pour filtrer et atténuer les vibrations générées dans l'aéronef. Il s'agit par exemple de systèmes actifs ou semi-actifs à masses actives, à raideur variable, ou à fluides rhéologiques (comme décrit dans le document US-5 490 436). Ces techniques comprennent également des systèmes munis de capteurs et d'architectures de contrôle permettant de commander des actions actives ou semi-actives. Ces techniques ont été développées pour limiter l'impact des forces de balourd sur la structure porteuse.

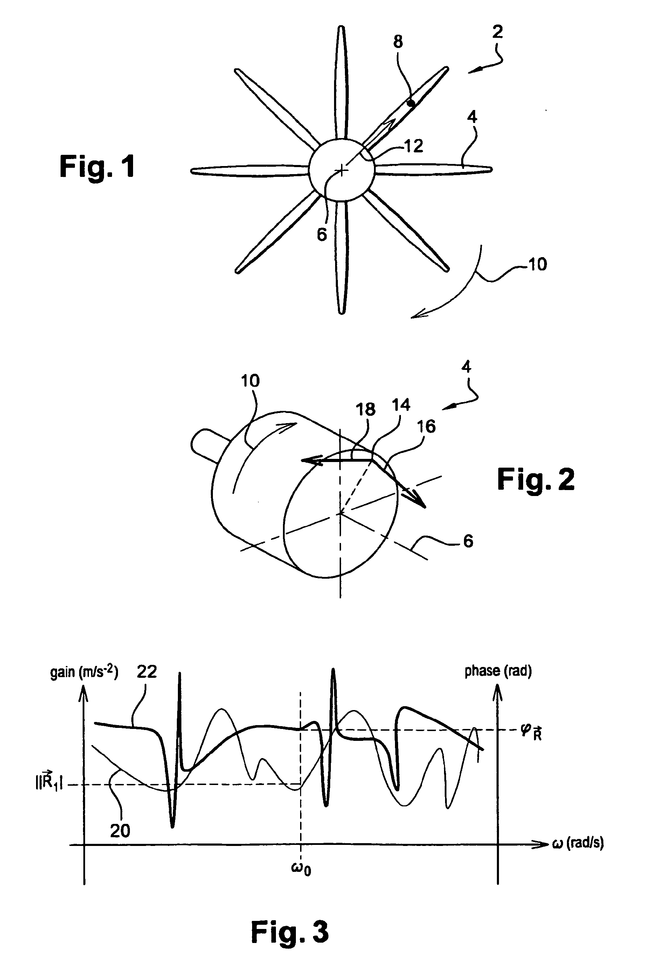

En référence à la figure 1, nous allons tout d'abord décrire le problème du balourd pour un disque unique en rotation. Sur cette figure, on a illustré un disque formant une hélice 2 comprenant des pales 4 ici au nombre de huit. L'hélice est montée mobile en rotation autour d'un axe 6 correspondant à son axe géométrique de symétrie principal. On suppose que l'hélice comprend un défaut d'équilibrage tel que le centre de gravité de l'hélice ne se trouve pas sur l'axe 6 mais est déporté radialement de ce dernier. Ce centre de gravité 8 est par exemple situé sur l'une des pales 4, comme cela a été indiqué de façon exagérée sur la figure 1. On suppose que l'hélice est mue en rotation autour de son axe 6 dans le sens indiqué par la flèche 10. Le centre de gravité 8 engendre alors une force de balourd 12 qui s'exerce sur l'hélice au niveau de l'axe 6 dans le plan du disque suivant une direction radiale vers l'extérieur et passe par le point 8. Cette force tourne dans le sens 10. Il s'agit d'un balourd d'inertie. Ainsi pour tout disque en rotation dont le centre d'inertie ne coïncide pas avec le centre de rotation, un balourd d'inertie produit une force radiale dans le plan du disque comme illustré sur la figure 1.

En référence à la figure 2, il peut exister également un balourd d'origine aérodynamique. C'est le cas lorsque le disque en mouvement comprend des surfaces portantes comme les faces des pales d'une hélice. Ainsi, un défaut de calage des surfaces portantes ou un défaut de forme de ces surfaces peut engendrer un balourd aérodynamique. Il peut aussi s'agir d'un problème de dispersion de la déformation aérodynamique des pales ou de dispersion du pas des pales. La force de balourd aérodynamique s'exerce à un point 14 situé à distance de l'axe 6. La force de balourd se décompose d'une part en un incrément de force de traction référencé 16 sur la figure 2 et situé hors du plan du disque d'hélice, et un incrément de force de traînée 18 se trouvant dans le plan du disque d'hélice.

On va maintenant présenter plus en détail certaines techniques d'équilibrage. On sait en effet mesurer les forces de balourd d'une machine tournante (ou d'un disque en rotation) en distinguant l'amplitude et l'angle de phase de la force par rapport à un axe fixe. L'une de ces techniques est par exemple la suivante. En vue d'éliminer les vibrations à une vitesse de rotation spécifique, on mesure d'abord les caractéristiques de balourd de la machine tournante. Pour cela, on mesure ou on calcule les forces de balourd qu'elle produit. Ces forces sont caractérisées par une excitation sinusoïdale dans le domaine de fréquence du régime du moteur dans un repère de référence fixe par rapport à la partie tournante, par exemple lié à la structure porteuse. Ces excitations sont en général mesurées au moyen d'un capteur des vibrations du moteur (un accéléromètre par exemple) ou par un jeu d'accéléromètres dédiés. On représente ainsi le balourd d'un disque rotatif au moyen de accélération mesurée R1 en termes d'amplitude (gain) et de phase ($\varphi$) dans l'axe de la structure porteuse fixe à la vitesse de rotation $\omega_o$ de la machine comme illustré à la figure 3. Cette dernière montre sur une première courbe 20 l'évolution du gain (en m/s$^{-2}$) en fonction de l'évolution de la vitesse de rotation $\omega$ (en rad/s), ainsi que sur la deuxième courbe 22 l'évolution de la phase $\varphi$ (en radians) en fonction de l'évolution de cette vitesse.

On peut utiliser la méthode de mesure suivante appelée méthode des coefficients d'influence des vecteurs. Après avoir mesuré l'accélération initiale R1, qui constitue le résultat de l'action du balourd recherché, on ajoute au système tournant des masselottes de balourd connues en vue de mesurer leur influence sur l'accélération mesurée. Par exemple, un balourd de valeur unitaire est ajouté sur le disque à l'angle de phase 0° et une nouvelle accélération R2 (gain et phase) à la vitesse $\omega_o$ est mesurée.

On calcule ensuite une solution vectorielle de la façon suivante :

- le balourd d'origine b1 conduit à l'accélération R1,
- l'ensemble (b1 + b2) formant la somme du balourd d'origine et du balourd unitaire conduit à une accélération R2,
- le balourd unitaire b2 est donc par déduction générateur de l'accélération R2-R1..

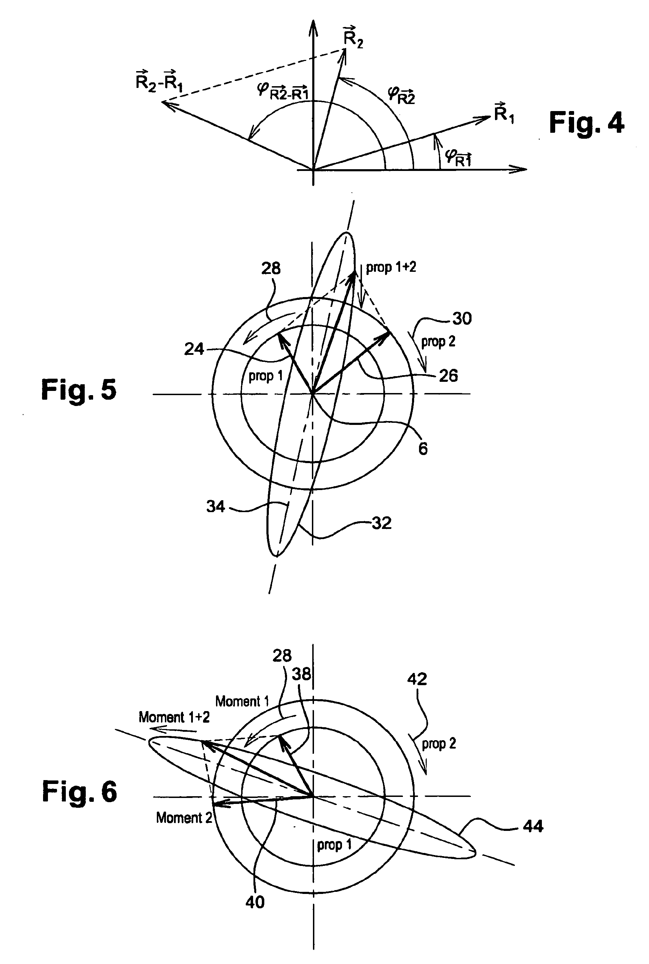

On renvoie à ce sujet à la figure 4 sur laquelle on a illustré dans un repère orthonormé les vecteurs R1, R2 et R2 - R1 qui ont respectivement des phases ($\varphi$R1, $\varphi$R2 et $\omega$(R2 - R1).

On note ici au passage que cette méthode de calcul suppose qu'il existe une relation linéaire entre le balourd et l'accélération correspondante mesurée.

Le calcul du balourd d'origine (et de la masse de correction nécessaire en conséquence) se fait alors de la façon suivante :

$$\begin{cases} \left\| \vec{b}_1 \right\| = \left\| \vec{b}_2 \right\| \dfrac{\left\| \vec{R}_1 \right\|}{\left\| \vec{R}_2 - \vec{R}_1 \right\|} \\ \varphi_{\vec{b}_1} = \varphi_{\vec{b}_2} + \varphi_{\vec{R}_1} - \varphi_{\vec{R}_2 - \vec{R}_1} \end{cases}$$

Pour obtenir des résultats affinés et minimiser les erreurs de mesure, on peut effectuer plusieurs étapes d'ajout de masselotte et de mesure d'accélération, avec des accélérations R3 et R4 par exemple.

Au passage, on indique que les balourds d'origine inertielle et d'origine aérodynamique peuvent devoir être mesurés séparément. La technique précitée peut être utilisée pour cela moyennant en outre des modifications de la vitesse de rotation et des modifications indépendantes de la demande de couple afin de distinguer la source de balourd venant de l'inertie et la source de balourd due aux caractéristiques aérodynamiques du rotor.

De même, lorsque la machine tournante comprend deux rotors ou plus, la même approche peut être reproduite pour chaque disque de rotor l'un après l'autre. Des logiciels de diagnostic de balourd fournissent alors des vecteurs de solution de l'équilibrage qui comprennent un vecteur de solution pour le premier rotor et un vecteur de solution pour le second rotor. Chaque vecteur de solution comprend un module et un angle de phase. Cette opération sera effectuée pour la caractérisation du balourd inertiel et ensuite pour la caractérisation du balourd aérodynamique.

On va maintenant présenter en référence à la figure 5 le problème du balourd de deux disques contrarotatifs. De même que pour un disque unique, en présence de deux disques contrarotatifs, le balourd d'inertie de chacun des disques produit une force radiale dans le plan du disque correspondant. Sur la figure 5, ces forces PROP1 24 et PROP2 26 ont été illustrées et s'exercent à l'axe de rotation 6 commun aux deux disques. Les deux disques tournent dans des sens de rotation différents respectivement indiqués 28 et 30 sur la figure 5. Les forces de balourd 24 et 26 tournent également dans des sens de rotation opposés l'une de l'autre, respectivement 28 et 30.

On considère maintenant la force PROP 1 + 2 résultant de la somme des deux forces de balourd PROP1 et PROP2 telle qu'elle est observée depuis le carter de la machine tournante ou sa structure porteuse. Le module de cette force résultante varie en fonction de la position relative des disques. Ce module décrit dans le temps une ellipse 32 centrée sur l'axe 6, ayant un petit axe égal à la différence entre les modules des forces PROP1 et PROP2 et un grand axe 34 égal à la somme des deux modules.

On considère maintenant le cas particulier dans lequel les modules des deux forces PROP1 et PROP2 sont égaux. Dès lors, le petit axe de l'ellipse a une longueur nulle et la force résultante PROP 1 + 2 est égale à la somme des modules des deux forces, ce qui en fait une pure force de secousse oscillatoire. L'ellipse se réduit donc à un segment. Par exemple, si on suppose que la phase $\varphi$ égale 0 lorsque les deux forces radiales PROP1 (ou $R_{disque1}$) et PROP2 (ou $R_{disque2}$) sont en phase, la force radiale résultante R se présente comme suit :

$$R(\omega t) = R_{disque1}(\omega t) + R_{disque2}(\omega t)$$

$$R(\omega t + \pi/2) = R_{disque1}(\omega t + \pi/2) - R_{disque2}(\omega t + \pi/2)$$

$$R(\omega t + \pi) = -[R_{disque1}(\omega t) + R_{disque2}(\omega t)]$$

$$R(\omega t + 3\pi / 2) = R_{disque2}(\omega t + 3\pi / 2) - R_{disque1}(\omega t + 3\pi / 2)$$

Par ailleurs, le moment résultant M en dehors du plan se présente comme suit:

$$M(\omega t) = 0$$

$$M(\omega t + \pi / 2) = [R_{disque1}(\omega t) + R_{disque2}(\omega t)] * brasdelevier$$

$$M(\omega t + \pi) = 0$$

$$M(\omega t + 3\pi / 2) = -[R_{disque1}(\omega t) + R_{disque2}(\omega t)] * brasdelevier$$

Le moment situé hors du plan est exprimé au centre du disque 1 par exemple. De plus, le bras de levier est la distance axiale entre les plans des disques 1 et 2.

La direction du grand axe de l'ellipse est fonction de la phase relative entre les forces de balourd PROP1 et PROP2. Par exemple, si la position des deux disques est telle que les deux forces sont en phase dans l'axe vertical, l'excitation maximale dans le plan des disques sera orientée dans la direction verticale. A l'opposé, si la position des deux disques est telle que les deux forces sont en opposition de phase (décalage de 180°) dans la direction verticale, l'excitation maximale dans le plan des disques aura lieu dans la direction horizontale.

Lorsque les deux disques contrarotatifs incorporent dès surfaces portantes aérodynamiques, les forces situées hors des plans des disques engendrent des moments passant par le centre de rotation de chaque disque. Dès lors, tout comme dans le cas du balourd d'inertie, le principe de la sommation vectorielle décrit pour les forces radiales est applicable pour les moments générés par les forces de balourd aérodynamiques comme on l'a illustré à la figure 6. Sur cette dernière, on distingue ainsi le Moment 1 référencé 38 associé au disque 1 tournant dans le sens 28 et le Moment 2 référencé 40 associé au disque 2 et tournant dans le sens 42. La somme vectorielle Moments 1 + 2 des deux moments décrit une ellipse 44.

Qu'il s'agisse de balourd inertiel ou de balourd aérodynamique, lorsque les deux disques tournent à la même vitesse, le grand axe de l'ellipse reste fixe par rapport à un axe fixe correspondant par exemple à la structure porteuse du moteur. A l'inverse, si les vitesses de rotation des disques ne sont pas les mêmes, l'axe de l'ellipse tourne à une vitesse égale à la différence de vitesse entre les deux disques.

Il faut ici relever qu'en complément des forces tournantes situées en dehors du plan des disques, des moments locaux sont générés entre les deux plans des disques. Les modules de ces moments dépendent de la distance entre les deux disques tournants.

Les techniques connues de réduction des vibrations s'avèrent toutefois peu efficaces, notamment dans le cadre des moteurs à rotors contrarotatifs.

Le document EP-A-1 296 082 divulgue un aéronef selon le préambule de la revendication 2.

Un but de l'invention est de réduire les vibrations générées dans la structure porteuse par de tels moteurs.

A cet effet, on prévoit selon l'invention un procédé de fabrication d'un aéronef comprenant au moins un moteur à rotors contrarotatifs selon la revendication 1. Dans ce procédé, le ou au moins l'un des moteurs présente des balourds relatifs aux rotors respectifs et associés à au moins une ellipse, et on fixe au moins un amortisseur de vibrations sur l'aéronef dans une disposition telle que, à une vitesse donnée du moteur et pour au moins une même direction donnée d'un grand axe de l'ellipse ou de l'une au moins des ellipses, une vitesse relative de deux extrémités de l'amortisseur est plus élevée que pour tout autre disposition de l'amortisseur.

Ainsi, les extrémités de l'amortisseur formant ses interfaces avec les éléments de l'aéronef qu'il relie, la disposition de l'amortisseur est choisie de telle sorte qu'il accomplit une absorption maximale des vibrations. On pourra donc ensuite effectuer le synchrophasage de façon à concentrer au maximum les vibrations dans cette direction afin que celles-ci soient absorbées par l'amortisseur. Ainsi, plutôt que de chercher à atténuer ou à compenser les vibrations là où elles sont produites, on cherche à les amortir dans la direction où cet amortissement est le plus efficace. En les concentrant suivant cette direction, on peut obtenir une atténuation particulièrement importante. On peut donc réduire grandement l'impact des vibrations du moteur sur la structure porteuse de l'aéronef. Contrairement aux techniques connues d'équilibrage, de filtrage et de dissipation qui sont mises en oeuvre de façon largement indépendante des forces de balourd en présence, l'invention réalise un contrôle des forces de balourd en amplitude et en direction, ce qui permet d'optimiser les moyens d'absorption des vibrations pour une meilleure réduction des vibrations perçues.

On pourra disposer l'amortisseur ou l'un des amortisseurs par exemple entre le mat portant le moteur et le moteur lui-même, entre le mat et le fuselage, entre le mat et une autre pièce, entre deux parties du mat, entre deux pièces portant le moteur, etc.

On prévoit également selon l'invention un aéronefselon la revendication 2

Avantageusement, la disposition de l'amortisseur est telle que la vitesse relative est plus élevée que pour tout autre disposition de l'amortisseur et quelle que soit la direction du grand axe.

Ainsi, la disposition de l'amortisseur favorise encore plus une absorption efficace des vibrations.

De préférence, la disposition de l'amortisseur est telle qu'il existe une direction du grand axe pour laquelle, à la vitesse donnée, la vitesse relative des deux extrémités est plus élevée que pour tout autre direction du grand axe.

On accroît encore par ce moyen l'efficacité de l'absorption des vibrations. Avantageusement, l'aéronef comprend au moins un capteur, de préférence fixé sur le moteur, apte à mesurer des vibrations du moteur, l'aéronef comprenant par exemple au moins deux capteurs aptes à mesurer des vibrations du moteur dans deux directions perpendiculaires l'une à l'autre.

Avantageusement, l'aéronef et conforme à la revendication 6.

On prévoit également selon l'invention un procédé de commande d'un aéronef selon la revendication 7.

On prévoit également selon l'invention un programme d'ordinateur qui comprend des instructions aptes à commander l'exécution d'un procédé selon l'invention lorsqu'il est exécuté sur un ordinateur, ainsi qu'un support d'enregistrement de données comprenant un tel programme.

D'autres caractéristiques et avantages de l'invention apparaîtront encore dans la description suivante d'un mode préféré de réalisation donné à titre d'exemple non limitatif en référence aux dessins annexés sur lesquels :

- les figures 1 et 2 sont deux vues respectivement de face et en perspective d'un disque tournant de l'art antérieur ;
- la figure 3 illustre l'évolution du gain et de la phase d'une force de balourd en fonction de la vitesse du disque tournant de la figure 1 ;
- les figures 4 à 6 sont des diagrammes illustrant sous forme vectorielle des forces de balourd dans le disque de la figure 1 ;
- la figure 7 est une vue schématique en élévation d'un aéronef selon un mode de réalisation de l'invention ; et
- la figure 8 est un schéma illustrant l'architecture de commande du moteur de l'aéronef de la figure 7.

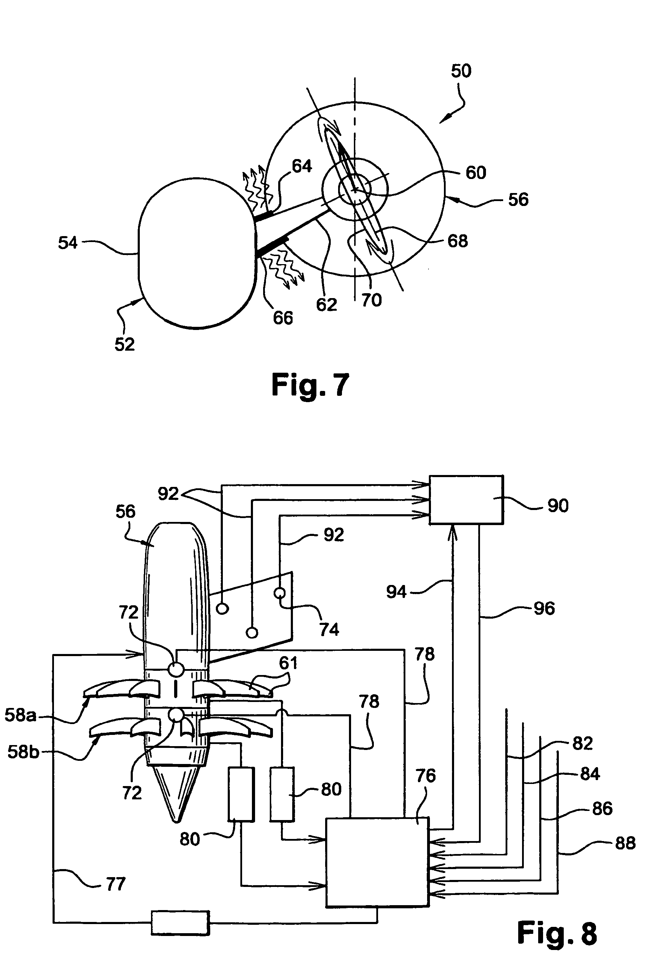

En référence aux figures 7 et 8, l'aéronef 50 selon l'invention comprend dans le présent mode de réalisation une structure principale 52 comportant notamment un fuselage 54. On suppose que, dans le présent exemple, l'aéronef comprend des moteurs 56, en l'espèce au nombre de deux, disposés symétriquement par rapport à un plan vertical médian du fuselage 54. Chaque moteur 56 est en l'espèce un turbopropulseur de type propfan comprenant deux hélices contrarotatives respectivement référencées 58a et 58b. Les deux hélices s'étendent coaxialement par référence à un axe commun 60, l'hélice avant 58a s'étendant devant l'hélice arrière 58b. Les deux hélices sont chacune munies de pales 61. Elles sont aptes a tourner dans des sens de rotation respectivement opposés. Chaque moteur 56 est relié au fuselage 54 au moyen d'un mat ou pylône 62.

On va maintenant décrire l'agencement associé à celui des moteurs 56 illustré sur la figure 7 sachant que l'autre moteur, non illustré, fait l'objet d'un agencement analogue.

Deux amortisseurs de vibrations 64 et 66 sont associés au moteur 56. On fixe les amortisseurs afin de minimiser la transmission des vibrations générées par le moteur jusqu'au fuselage 54. Comme indiqué plus haut, ces vibrations proviennent de balourds associés à chacune des hélices 58a et 58b. Il peut s'agir pour chacune d'elles d'un balourd d'inertie ou d'un balourd aérodynamique, voire des deux types de balourds. Les amortisseurs sont formés de matériaux dissipateurs des vibrations ou isolants à l'égard des vibrations. Il peut par exemple s'agir de dispositifs de suspension.

L'efficacité de l'amortissement des vibrations sera fonction de la disposition de chaque amortisseur sur la structure porteuse. Cette disposition comprend la position de l'amortisseur ainsi que son orientation de sorte qu'il conviendra de choisir chacune des deux (pour une position donnée de l'amortisseur, telle orientation peut être préférable à telle autre. Inversement, pour une orientation donnée de l'amortisseur, telle position peut être préférable à telle autre). On a vu plus haut que des vibrations transmises par un moteur sont caractérisées notamment par l'orientation du grand axe 68 de l'ellipse 70 associée aux balourds générant ces vibrations. Elles dépendent ainsi à la fois de l'orientation de ce grand axe 68 et de la longueur de ce grand axe. On considère dans la suite une vitesse donnée fixe de fonctionnement du moteur 56.

On choisit la disposition de chacun des amortisseurs 64, 66 de sorte que, à cette vitesse donnée du moteur, quelle que soit la direction du grand axe 68, la vitesse relative de bords ou de deux extrémités de l'amortisseur est plus élevée que pour tout autre disposition de l'amortisseur. es extrémités considérées sont de préférence celles qui sont les plus proches respectivement du moteur 56 concerné et du fuselage. Les vibrations entrent dans l'amortisseur par son extrémité amont la plus proche du moteur et en ressortent par son extrémité aval la plus proche du fuselage en étant atténuées en tout ou partie. Cette vitesse relative élevée signifie que l'amortisseur réalise une bonne absorption des vibrations produites par le moteur.

En l'espèce, on choisit même la disposition de chaque amortisseur de sorte qu'il existe une direction du grand axe 68 pour laquelle, à la vitesse donnée du moteur, la vitesse relative des extrémités est plus élevée que pour tout autre direction du grand axe. C'est cette direction particulière qui a été illustrée sur la figure 7.

En d'autres termes, l'amortissement produit par chaque amortisseur peut être considéré comme une fonction dépendant des deux variables suivantes :

- la disposition de l'amortisseur sur la structure porteuse ; et
- l'orientation du grand axe de l'ellipse 68 .

On choisit donc la disposition de chaque amortisseur de sorte que l'absorption atteint un maximum absolu quelle que soit la direction du grand axe 68. Ce choix est fait par exemple à l'issue d'une modélisation et d'une analyse numérique.

En l'espèce et uniquement à titre d'exemple illustratif, les amortisseurs ont été disposés à l'extrémité du mat 62 contiguë au fuselage 54. On observera que ces amortisseurs constituent des organes spécifiques rapportés sur le mat 62 et ne sont pas constitués par ce dernier qui par ailleurs a intrinsèquement également une fonction d'amortissement des vibrations.

Ensuite, lors du fonctionnement de l'aéronef, on commande le moteur de façon que, à la vitesse précitée, on oriente l'ellipse 70 dans une position fixe où son grand axe 68 est dans la direction préférée précitée.

En référence à la figure 8, on prévoit pour les hélices 58a, 58b des capteurs de vibration 72 respectifs placés le plus près possible du plan d'excitation de l'hélice associée. Les capteurs 72 sont fixés à une partie fixe du moteur. Chacun de ces capteurs est apte à mesurer l'accélération radiale de l'hélice associée par rapport au carter du moteur.

Dans une variante non illustrée, on pourrait associer à chaque hélice deux capteurs (donc quatre au total pour le moteur) disposés pour mesurer l'accélération dans deux directions radiales perpendiculaires l'une à l'autre et chacune perpendiculaire à l'axe 60.

A chaque moteur sont également associés des accéléromètres 74 de mat et répartis sur le mat 62. Ils sont ici au nombre de trois, deux accéléromètres s'étendant à proximité d'un bord avant du mat et un accéléromètre s'étendant à proximité du bord arrière.

L'aéronef comprend des moyens de commande 76 formés en l'espèce par une unité de type EEC (Electronic Engine Controller ou commande électronique de moteur). L'unité 76 est connectée aux capteurs 72 par des lignes 78 pour recevoir des données de chacun d'eux. Elle est également connectée par des lignes 80 à des organes classiques des hélices par lesquels l'unité reçoit des informations sur la position de l'hélice en degrés et sa vitesse en tours par minute. L'unité 76 reçoit également par des lignes respectives 82, 84, 86 et 88 des données relatives à l'air, à la demande de prélèvement d'air, à la demande de poussée et à l'aéronef en régime de croisière.

L'aéronef comprend aussi une unité de synchrophasage 90 connectée par des lignes 92 aux trois accéléromètres respectifs 74 afin de recevoir des données d'accélération de ces derniers reflétant les vibrations parcourant le mat 62. L'unité 90 est également connectée par une ligne 94 à l'unité de commande 76 afin de recevoir des données de position et de vitesse concernant chacune des hélices 58a et 58b. Une ligne 96 permet à l'unité de synchrophasage de transmettre aux moyens de commande 76 des consignes de vitesse de l'hélice avant et de l'hélice arrière.

L'unité 76 est apte à commander un flux dans un circuit de carburant afin de régler la phase de chaque hélice. Ainsi, l'unité 76 tient compte des données reçues pour commander le flux de carburant dans le moteur, le pas du propulseur avant et celui du propulseur arrière, par la ligne 77 la reliant au moteur.

Les unités 76 et 90 forment chacun des moyens de commande électronique à microprocesseur comprenant au moins un programme enregistré sur un support d'enregistrement de données tel qu'un disque dur ou une mémoire flash. L'une des programmes comprend des instructions de code aptes à mettre en oeuvre en partie au moins le procédé selon l'invention lorsqu'il est exécuté sur ces moyens formant ordinateur.

Les lignes 82, 84, 86, 88, 94 et 96 font partie du réseau de communication de données à bord de l'aéronef. Il s'agit par exemple d'un réseau de type AFDX (Avionics Full Duplex Switch).

Pour la commande du moteur 56, l'unité de synchrophasage 90 obtient les données de position et de vitesse relevées pour chacune des deux hélices. Elle détermine la phase relative réelle des deux hélices et la phase à atteindre. Elle peut aussi calculer, comme expliqué plus haut, la position angulaire réelle de l'ellipse 70 et celle à atteindre. L'unité de synchrophasage 90 transmet ensuite à l'unité de commande 76 des valeurs de consigne permettant de placer ou de maintenir le grand axe 68 dans la direction constante précitée. Il s'agit de la direction dans laquelle la vitesse relative des extrémités des absorbeurs est plus élevée que pour tout autre direction du grand axe.

On voit donc que l'invention permet une approche directe pour réduire les vibrations de balourds des rotors contrarotatifs. On détermine une disposition des amortisseurs dans laquelle les vibrations pourront être absorbées au maximum, puis on commande le synchrophasage des deux hélices afin que les vibrations soient concentrées dans cette direction. En d'autres termes, on oriente convenablement le grand axe de l'ellipse. Ainsi, l'invention constitue un agencement pour le contrôle des vibrations qui combine le potentiel des amortisseurs disposés dans une direction et un emplacement optimaux, et la capacité du synchrophasage de fixer la direction des forces d'excitation. L'énergie des vibrations ainsi concentrée dans une direction donnée sera dissipée au moyen d'amortisseurs agissant de façon privilégiée dans cette direction. Dans ces conditions, le moins d'énergie possible est transmis à la structure porteuse de l'aéronef et en particulier au fuselage 54. On réduit également la quantité d'énergie apparaissant dans le moteur.

On a exposé un exemple de réalisation de l'invention en considérant l'ellipse des balourds inertiels du moteur sans considérer l'ellipse des balourd aérodynamiques. On opère de façon analogue pour traiter la situation contraire, à savoir si l'on veut prendre en compte les balourds aérodynamiques et non les balourds inertiels. Enfin, on peut prendre en compte à la fois les deux types de balourd pour fixer la position des amortisseurs. Il s'agira ensuite de commander le moteur de sorte que les deux ellipses sont orientées dans la ou les directions optimales, à savoir celles où les vibrations des deux origines sont efficacement absorbées.

Bien entendu, on pourra apporter à l'invention de nombreuses modifications sans sortir du cadre de celle-ci. L'invention est applicable aux moteurs comprenant plus de deux pièces tournantes indépendantes les unes des autres. Le nombre d'amortisseurs 64, 66 pourra être égal à un ou supérieur ou égal à trois.

## Revendications

1. Procédé de fabrication d'un aéronef (50) comprenant au moins un moteur (56) à rotors contrarotatifs (58a, 58b), le ou au moins l'un des moteurs présentant des balourds relatifs aux rotors respectifs et associés à au moins une ellipse (70), dans lequel on fixe au moins un amortisseur de vibrations (64, 66) sur aéronef dans une disposition telle que, à une vitesse donnée du moteur et pour au moins une même direction donnée d'un grand axe (68) de l'ellipse ou de l'une au moins des ellipses, une vitesse relative de deux extrémités de l'amortisseur est plus élevée que pour tout autre disposition de l'amortisseur.

2. Aéronef (50) comprenant un moteur (56) présentant des balourds et au moins un amortisseur de vibrations (64, 66), **caractérisé en ce que** le moteur (56) est à rotors contrarotatifs (58a, 58b), le moteur ou au moins l'un des moteurs présentant des balourds relatifs aux rotors respectifs et associés à au moins une ellipse (70), l'amortisseur de vibrations (64, 66) étant fixé dans une disposition telle que, à une vitesse donnée du moteur et pour au moins une même direction donnée d'un grand axe (68) de l'ellipse ou de l'une au moins des ellipses, une vitesse relative de deux extrémités de l'amortisseur est plus élevée que pour tout autre disposition de l'amortisseur.

3. Aéronef selon la revendication précédente dans lequel la disposition de l'amortisseur (64, 66) est telle que la vitesse relative est plus élevée que pour tout autre disposition de l'amortisseur et quelle que soit la direction du grand axe (68).

4. Aéronef selon au moins l'une quelconque des revendications 2 ou 3 dans lequel la disposition de l'amortisseur (64, 66) est telle qu'il existe une direction du grand axe (68) pour laquelle, à la vitesse donnée, la vitesse relative des deux extrémités est plus élevée que pour tout autre direction du grand axe.

5. Aéronef selon au moins l'une quelconque des revendications 2 à 4, qui comprend au moins un capteur (72), de préférence fixé sur le moteur (56), apte à mesurer des vibrations du moteur, l'aéronef comprenant par exemple au moins deux capteurs aptes à mesurer des vibrations du moteur dans deux directions perpendiculaires l'une à l'autre.

6. Aéronef selon au moins l'une quelconque des revendications 2 à 5, qui comprend des moyens (90, 76) aptes à commander le moteur ou l'un au moins des moteurs (56) en vue de maintenir le grand axe (68) dans une direction constante, de préférence une direction dans laquelle la vitesse relative est plus élevée que pour tout autre direction du grand axe.

7. Procédé de commande d'un aéronef selon au moins l'une quelconque des revendications 2 à 6, **caractérisé en ce qu'**on commande le moteur (56) ou l'un au moins des moteurs en donnant aux rotors la même vitesse de rotation et une différence de phase, de façon à maintenir le grand axe (68) dans une direction constante.

8. Programme d'ordinateur **caractérisé en ce qu'**il comprend des instructions aptes à commander l'exécution d'un procédé selon au moins l'une quelconque des revendications 1 et 7 lorsqu'il est exécuté sur un ordinateur.

9. Support d'enregistrement de données comprenant un programme selon la revendication précédente.

# EP 2 303 695 B1

## Patentansprüche

1. Verfahren zur Herstellung eines Flugzeugs (50), aufweisend mindestens ein Triebwerk (56) mit gegenläufigen Rotoren (58a, 58b), wobei das Triebwerk oder mindestens eines der Triebwerke Unwuchten aufweist, die relativ zu den jeweiligen Rotoren sind und mindestens einer Ellipse (70) zugeordnet sind, wobei mindestens ein Schwingungsdämpfer (64, 66) an dem Flugzeug in einer derartigen Anordnung befestigt wird, dass, bei einer bestimmten Drehzahl des Triebwerks und für mindestens eine durch eine große Achse (68) der Ellipse oder mindestens eine der Ellipsen bestimmte Richtung, eine relative Geschwindigkeit von zwei Enden des Dämpfers höher als bei jeder anderen Anordnung des Dämpfers ist.

2. Flugzeug (50) aufweisend ein Triebwerk (56), das Unwuchten und mindestens einen Schwingungsdämpfer (64, 66) aufweist, **dadurch gekennzeichnet, dass** das Triebwerk ein Triebwerk mit gegenläufigen Rotoren (58a, 58b) ist, wobei das Triebwerk oder mindestens eines der Triebwerke Unwuchten aufweist, die relativ zu den jeweiligen Rotoren sind und mindestens einer Ellipse (70) zugeordnet sind, wobei der Schwingungsdämpfer (64, 66) in einer derartigen Anordnung befestigt ist, dass, bei einer bestimmten Drehzahl des Triebwerks und für mindestens eine durch eine große Achse (68) der Ellipse oder mindestens einer der Ellipsen bestimmte Richtung, eine relative Geschwindigkeit von zwei Enden des Dämpfers höher als bei jeder anderen Anordnung des Dämpfers ist.

3. Flugzeug nach dem vorhergehenden Anspruch, wobei die Anordnung des Dämpfers (64, 66) dergestalt ist, dass die relative Geschwindigkeit höher als bei jeder anderen Anordnung des Dämpfers und unabhängig von der Richtung der großen Achse (68) ist.

4. Flugzeug nach mindestens einem der Ansprüche 2 oder 3, wobei die Anordnung des Dämpfers (64, 66) dergestalt ist, dass eine Richtung der großen Achse (68) existiert, bei der, bei einer bestimmten Drehzahl, die relative Geschwindigkeit der zwei Enden höher als bei jeder anderen Richtung der großen Achse ist.

5. Flugzeug nach mindestens einem der Ansprüche 2 bis 4, das mindestens einen Sensor (72) aufweist, der vorzugsweise an dem Triebwerk (56) befestigt ist, der dafür geeignet ist, Schwingungen des Triebwerks zu messen, wobei das Flugzeug zum Beispiel mindestens zwei Sensoren aufweist, die dafür geeignet sind, Schwingungen des Triebwerks in zwei Richtungen zu messen, die senkrecht zueinander sind.

6. Flugzeug nach mindestens einem der Ansprüche 2 bis 5, das Mittel (90, 76) aufweist, die dafür geeignet sind, das Triebwerk oder mindestens eines der Triebwerke (56) zu steuern, indem den Rotoren dieselbe Drehzahl und eine Phasendifferenz verliehen wird, um die große Achse (68) in einer konstanten Richtung zu halten, vorzugsweise in einer Richtung, in der die relative Geschwindigkeit höher als bei jeder anderen Richtung der großen Achse ist.

7. Verfahren zum Steuern eines Flugzeugs nach mindestens einem der Ansprüche 2 bis 6, **dadurch gekennzeichnet, dass** das Triebwerk (56) oder mindestens eines der Triebwerke gesteuert wird, indem den Rotoren dieselbe Drehzahl und eine Phasendifferenz verliehen wird, derart, dass die große Achse (68) in einer konstanten Richtung gehalten wird.

8. Computerprogramm, **dadurch gekennzeichnet, dass** es Anweisungen umfasst, die dafür geeignet sind, die Ausführung eines Verfahrens nach mindestens einem der vorhergehenden Ansprüche 1 und 7 zu steuern, wenn es auf einem Computer ausgeführt wird.

9. Datenaufzeichnungsträger, umfassend ein Programm nach dem vorhergehenden Anspruch.

## Claims

1. A method of manufacturing an aircraft (50) comprising at least one engine (56) having counter-rotating rotors (58a, 58b), the engine or at least one of the engines having imbalances of the respective rotors and that are associated with at least one ellipse (70), method wherein at least one vibration damper (64, 66) is attached to the aircraft in an arrangement such that, at a given engine speed and for at least one given direction of a major axis (68) of the ellipse or at least one of the ellipses, a relative speed of two ends of the damper is higher than for any other arrangement of the damper.

2. An aircraft comprising an engine (56) having imbalances and at least one vibration damper (64, 66), the aircraft being **characterized in that** the engine has counter-rotating rotors (58a, 58b), the engine or at least one of the engines having imbalances of the respective rotors and that are associated with at least one ellipse (70), the vibration damper (64, 66) being attached in an arrangement such that, at a given engine speed and for at least one given direction of a major axis (68) of the ellipse or at least one of the ellipses, a relative speed of two ends of the damper is higher than for any other arrangement of the damper.

3. An aircraft according to the preceding claim, wherein the arrangement of the damper (64, 66) is such that the relative speed is higher than for any other arrangement of the damper, irrespective of the direction of the major axis (68).

4. An aircraft according to claim 2 or claim 3, wherein the arrangement of the damper (64, 66) is such that there is one direction of the major axis (68) for which, at the given speed, the relative speed of the two ends is higher than for any other direction of the major axis.

5. An aircraft according to any one of claims 2 to 4, comprising at least one sensor (72), preferably attached to the engine (56), capable of measuring the engine vibrations, the aircraft comprising for example at least two sensors capable of measuring the engine vibrations in two directions perpendicular to each other.

6. An aircraft according to any one of claims 2 to 5, comprising means (90, 76) capable of controlling the engine or at least one of the engines (56) by imparting the same speed of rotation and a phase difference to the rotors in order to keep the major axis (68) in a constant direction, preferably a direction wherein the relative speed is higher than for any other direction of the major axis.

7. A method of controlling an aircraft according to any one of claims 2 to 6, **characterized in that** the engine (56) or at least one of the engines is controlled by imparting the same speed of rotation and a phase difference to the rotors so as to keep the major axis (68) in a constant direction.

8. A computer program **characterized in that** it includes instructions capable of controlling execution of a method according to any one of claims 1 to 7 when executed on a computer.

9. A data storage medium including a program according to the preceding claim.

Fig. 1

Fig. 2

Fig. 3

Fig. 4

Fig. 5

Fig. 6

**Fig. 7**

**Fig. 8**

**EP 2 303 695 B1**

## RÉFÉRENCES CITÉES DANS LA DESCRIPTION

**Documents brevets cités dans la description**

- WO 2006017201 A
- US 4689821 A
- US 20050065712 A
- WO 2005042959 A
- US 005221185 A
- US 5490436 A
- EP 1296082 A